# EUROPEAN PATENT SPECIFICATION

(11) **EP 2 789 274 B1**
(45) Date of publication and mention of the grant of the patent: **23.03.2016**
(21) Application number: 14001289.9
(22) Date of filing: 09.04.2014
(51) Int. Cl.: A47J 31/36

(54) **AC and/or low DC voltage powered machine for preparing espresso coffee or other infused beverages**
Von Wechsel- und/oder geringer Gleichspannung angetriebene Maschine zur Zubereitung von Espressokaffee oder anderer Aufgussgetränke
Machine alimentée en tension CA et/ou basse tension CC permettant de préparer un café expresso ou d'autres boissons infusées

(30) Priority: 09.04.2013 IT PN20130019
(43) Date of publication of application: 15.10.2014
(73) Proprietor: Giacomin, Paola, 31015 Conegliano (TV) (IT)
(72) Inventor: Giacomin, Paola, 31015 Conegliano (TV) (IT)
(74) Representative: Dalla Rosa, Adriano

(56) References cited:
- US-A1- 2007 151 458
- US-A1- 2010 147 155
- US-A1- 2011 113 968

## Description

The invention relates to a low DC voltage and optionally an AC voltage powered machine for preparing espresso coffee or other infused beverages, and of a stationary type or transportable on different positions and places, which is able to deliver in a quick manner many drinks and beverages in sequence.

At the present time, the electric machines for preparing coffee or other infused beverages are installed on stationary positions, from which they cannot be easily displaced, and are supplied with AD supply voltage of 230 V only. Moreover, such machines are provided with filter supports adapted to receive some filters loaded with the powdered infused beverage to be prepared, or some filters adapted to receive a waffle or a capsule containing such powdered infused beverage. Such a machine is known from US 2011/0113968 Therefore, in the machines of this kind the filter lends itself to prepare the infused beverage by introducing the powdered beverage or the waffle of such beverage to be prepared therein, or the machine may be loaded with a capsule of the same beverage, and thus these machines aren't able to prepare the infused beverages by utilizing both the waffles and the capsules as well as the ground coffee.

Furthermore, these machines are provided with high power operated heating elements, involving considerable energetic consumptions for heating water for the infusion at the required high temperatures and for the needed time periods for preparing several doses of the desired infused beverages, and often have cumbersome dimensions.

The object of the present invention is to realize a machine with reduced and compact dimensions for preparing espresso coffee or other infused beverages, in which the above mentioned applicative drawbacks and limits of the currently used machines are eliminated, and which is able to prepare the infused beverages with extremely reduced energetic consumptions, and able to be supplied with low DC voltage, and besides may be loaded with loose powder of the infused beverage and with waffles or capsules containing the powdered infused beverage, and may be installed not only on stationary positions but also on different positions and places, in an easy and quick manner. This machine is realized with the constructive characteristics substantially described, with particular reference to the attached patent claims.

The invention will be understood better from the following description, given by way of a not limitative example only and with reference to the accompanying drawings, in which:
- Fig. 1 shows a perspective front view of the machine according to the invention, on an assembled condition thereof and in one of the possible versions thereof;
- Fig. 2 shows a front view of the machine of Fig. 1, on a disassembled condition thereof;
- Fig. 3 shows a view taken from a side of the disassembled machine of Fig. 1 ;
- Fig. 4 shows a view taken from the other side of the disassembled machine of Fig. 1;
- Fig. 5 shows a plan view of the disassembled machine of Fig. 2 ;
- Fig. 6 shows a perspective front and exploded view of all the component parts of the machine according to the invention ;
- Fig. 7 shows a schematic view of the different component parts of the hydraulic circuit of the machine ;
- Fig. 8 shows a perspective front view of the present machine, assembled into a column to be laid onto the ground;
- Fig. 9 shows a perspective front view of the present machine, with an included battery and on a first portable version thereof;
- Fig. 10 shows a perspective front view of the machine of Fig. 9, on a second portable version thereof, assembled on to a transport truck;
- Fig. 11 shows a perspective front view of the machine of Fig. 9, on a third portable version thereof, assembled on to a different transport truck, protected by an umbrella;
- Figs. 12 and 13 show a perspective front view of the machine on further portable versions thereof;
- Fig. 14 and 14 a show respectively a perspective open front view and a closed front view of the machine on a built-in version thereof.
- Fig. 15 shows a schematic view of additional electric component parts of the machine for espresso coffee according to the invention.

The above mentioned Figures illustrate an espresso coffee machine or for other infused beverages, supplied with a low DC voltage and/or AC voltage, and of compact and stationary type or transportable on different positions and places. This machine is able to be installed into means for inhabited uses, campers, caravans, motor-homes, different kinds of boats, commercial and industrial vehicles such as for example motor-bus, motor coaches, trains, airplanes, trucks, motor-vehicles for private or public use, for domestic and public uses, catering, vending, OCS, Horeca, and leasing to privates or Firms with or without service for supplying raw material (coffee, barley, etc...) as well as for being able to be transported on to trucks of various kind, which can be utilized on the roads, squares, parks, golf-fields, trains, airplanes etc... and other applications.

In case, the machine may be also provided with systems (deconto or similar) for the leasing market (ocs and similar markets) for mechanically or electronically counting the delivered beverage. The machine is arranged, in the manner which will be described, for preparing coffee and several kinds of infused beverages, such as for example white coffee, barley, tea, camomile, liquid foods etc.., by utilizing the loose powder of such beverages or the waffles or the capsules containing such powder, metered and pressed in the best way.

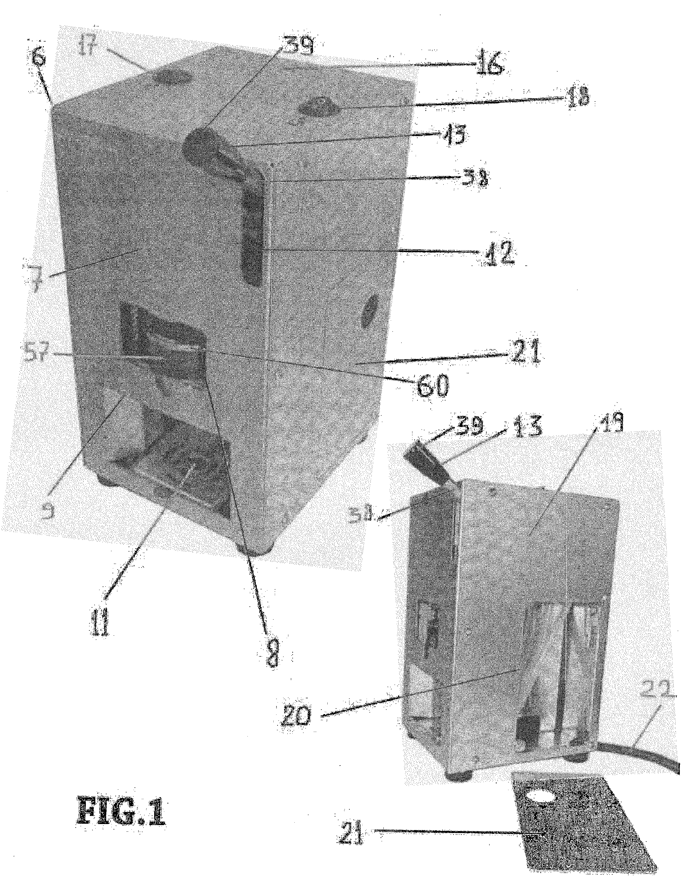

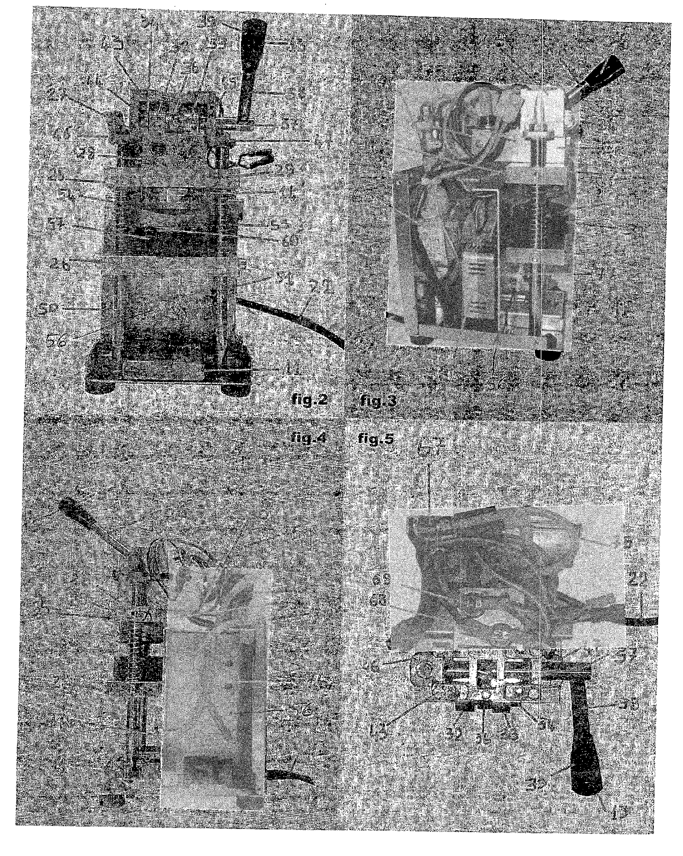

As particularly visible in the Fig. 1, in which the machine is on the assembled condition and in the Fig. 1 and the Figs. 2-6, in which the machine is respectively on the assembled and the disassembled condition thereof, for pointing out its various component parts and their installation position, the machine is substantially constituted by a box-like cabinet 6 with reduced and compact dimensions, having a limited height and width and depth smaller than those of the height, which cabinet is composed of various profiled parts which are joined removably to each other in a per se known manner, and the front wall 7 of the cabinet 6 is provided with a set of through openings, of which the first two openings 8 and 9 thereof are of squared shape, and positioned centrally and overlapped to each other in the lower part of the cabinet 6, and the upper opening 8 of which is adapted to house a filtering and infusion unit 10 for housing a waffle or a capsule or the loose powder of the desired beverage to be prepared, and for delivering the infused beverage which is prepared, while the lower opening 9 is adapted to house a removable cup support 11, adapted to support the cup or glass where the beverage delivered by the unit is poured. Said through openings comprise a third opening 12 of vertically lengthened rectangular shape, and positioned in the upper right position of the cabinet 6, which is adapted to house a regulating handle 13, co-operating with the filtering and infusion unit 10 for moving a part thereof, and which is supported and driven in the manner which will be described.

The filtering and infusion unit 10 is substantially constituted by a lower stationary portion (filter supporting body, which will be better described and illustrated later on), on to which the waffle support filter or the ground coffee support filter or the appropriate capsule support is positioned, and by an upper movable portion (cylindrical head 14 with valve 15), which portion is adapted to be displaced in the vertical direction in the manner and for the grounds which will be described, from a raised position to a lowered position thereof with respect to the lower stationary portion of the filtering and infusion unit 10, and the displacement movement of such upper portion from the one to the other one of its lowered and raised positions is determined by said side regulating handle 13, co-operating with such movable portion as it will be described further on, and slidable in an alternate vertical direction along the corresponding third vertical through opening 12.

Moreover, in the upper horizontal surface 16 of the cabinet 6 there are also situated some control push buttons, or equivalent means, marked with the reference numerals 17, 18 and 4, which are actuated selectively by the user for performing the machine operative functions which will be described. Besides, in the side wall 19 of the cabinet 6 another rectangular through opening 20 is provided, delimiting an inner cavity (not indicated) in which a water container for preparing the infused beverage is arranged and housed, which container may be advantageously shaped like a bottle, or also with different forms and dimensions and is capable to contain a water quantity enough to prepare several doses of infused beverages, such through opening being provided with a set of permanent magnets (not indicated) for introducing and securing a covering plate 21 made of metal or another material, with dimensions adapted to be coupled perfectly into the same opening.

Finally, in some possible described versions, the machine is also provided rearward with one or more supply cables (22) which are supplied by the DC voltage, for example at 12 V or 24 V, and/or AC voltage for example at 127 or 230 V, for supplying the various electric components of the machine with a low DC voltage, for example at 12 or 24 V, and/or an AC voltage for example at 127 or 230 V.

All the functional component parts of the machine, which will be described later on, are supported on and secured to a box-like structure of metallic or other material, formed by a thick upper and horizontal flat plate 25 of quadrangular shape, and by another thick lower and horizontal flat plate 26, spaced away vertically from the plate 25 and shaped with quadrangular form, and joined to the upper plate 25 as it will be described, said plates being dimensioned with the same size and being enclosed by the peripheral walls of the box-like cabinet 6, to which they are secured by per se known means.

Another thick metallic flat plate 27 (heat exchanger) also of quadrangular shape is secured onto the upper plate 25, and is narrower than the plate 25 and the vertical front edge 28 of which is re-entering with respect to the correspondent vertical front edge 29 of said plate 25, and the vertical rear edge 30 of which is projected beyond the correspondent vertical rear edge 31 of such plate 25. Two bearings 32 and 33 are arranged on to the upper horizontal flat surface of such additional flat plate 27, which bearings are spaced away from each other in the longitudinal direction of this plate, and into which a correspondent short horizontal pivot 34 is inserted and supported, which is oriented in the length direction of the additional flat plate 27 and passes through a correspondent axial through hole 35 provided at one end portion of a metallic rectilinear arm 36, the other end portion of which is joined orthogonally with a rectilinear and lengthened cylindrical arm 37 of the regulating handle 13, which lengthened arm 37 is oriented in the width direction of such flat plate 27, and is joined orthogonally with a further lengthened cylindrical arm 38 of which such handle is composed, which is oriented in the depth direction of the flat plate 27 and at the end portion of which a handgrip 39 which can be grasped by the user is applied.

In particular, the longitudinal lengthened arm 37 of the regulating handle 13 is housed into two vertical brackets 40 and 41, from which it is therefore supported in rotation, which brackets are secured to the lower and central part of a horizontal flat portion 42 of a metallic load bearing structure 43 shaped as a reversed U, constituted also by two vertical flat portions 44 and 45 identical and spaced away from each other and joined at their upper end portions with the relative end portions of such horizontal portion 42, as well as bent orthogonally at their lower end portions, so as to form two short horizontal flat projections 46 and 47, provided with a respective vertical through hole 48 and 49.

Such vertical flat portions 44 and 45 of the load bearing structure 43 are spaced away from each other for an extent larger than the length of the underlying further flat plate 27, in a way that the plates 27 and 25 and the movable upper part of the underlying infusion unit 10 may be raised and lowered as it will be described.

The upper flat plate 25 and the lower one 26 are joined and supported to each other by means of two vertical cylindrical bars 50 and 51, identical to each other, which are inserted into the relative vertical through holes 48 and 49 of the horizontal projections 46 and 47 and through correspondent vertical through holes 52 and 53 provided through the lower plate 26. The upper end portions of the vertical bars 50 and 51 are bolted or fixed in another suitable manner to the relative horizontal projections 46 and 47, and likewise the lower end portions of such vertical bars are also bolted or fixed in another suitable manner to the lower plate 26, and the lower end portion of the bars referred to, which is comprised between the upper and the lower plates 25 and 26, is wound by a respective compression spring 54 and 55, the end portions of which are abutting respectively on the lower flat surface of the upper plate 25 and on the upper flat surface of the lower plate 26, and such compression springs 54 and 55 are loaded in a manner to keep the upper plate 25 steadily on a raised position, in which it is moved and spaced away from the underlying lower plate 26. Then, under this raised condition of the upper plate 25, the machine is in the rest position thereof and the regulating handle 13 is so displaced with its arm 38 in the inclined and raised position thereof, and therefore also with its short arm 36 in the raised position thereof, and under this condition in the component parts which will be subsequently described of the filtering and infusion unit 10 of the coffee making machine it may be introduced a waffle or a capsule or the loose powder of the desired beverage to be prepared, thereby arranging the machine for performing an infusion cycle.

Finally, the removable cup support 11 is constituted by a support shaped as a grating, which is slidably inserted into corresponding guide members (not indicated) of the side walls of the machine cabinet 6, on the lower part of the lower opening 9, and on to which a relative container (not indicate) is laid on in a position below the filtering and infusion unit 10, so as to be able to receive the infused beverage which is prepared by and delivered from such filtering and infusion unit.

In this way, thanks to the fact to be inserted in position as described, such cup support 11 may be extracted easily and quickly at any moment for being cleaned.

For carrying out the infusion cycle, the arm 38 of the regulating handle 13 is grasped by the user and pushed downward, in the position inclined and displaced downward, and under this condition the arm 36 too of the handle is displaced downward, by the rotation of its pivot 34 in the relative bearings 32 and 33, thereby providing for a consequent compression of the upper plates 27 and 25 downward, which plates are so lowered against the action of the springs 54 and 55, up to displace the upper plate 25 in the maximum lowered position thereof, in which the component parts of the filtering and infusion unit 10 come into contact to each other, and under this condition the infusion cycle may be started, the whole in the manner which will be described subsequently, and during this infusion cycle the regulating handle 13 is always kept in this lowered position, up to the end of the infusion and delivery of the beverage on the metered doses.

Thereafter, as soon as the infusion cycle is terminated, the regulating handle 13 is released and return back automatically, with a movement inverse to the previous one, in the starting raised position thereof, thanks to the thrust upward exerted by the springs 54 and 55 against the upper plate 25, so that the exhausted waffle of the just prepared beverage may be removed from the component parts of the filtering and infusion unit 10, thereby arranging the machine for carrying out a further infusion cycle in the same manner.

In the rear part of the upper plate 25 and the lower plate 26 a metallic flat partition and vertical wall 56 is arranged, which is extended from the upper plate 25 up to the machine bottom and is secured with per se known means to the box-like cabinet 6 of the same machine, thereby delimiting both the inner cavity for housing the water container, in a position corresponding to that of the covering plate 21, and an additional inner cavity for housing the machine operative component parts which will be described.

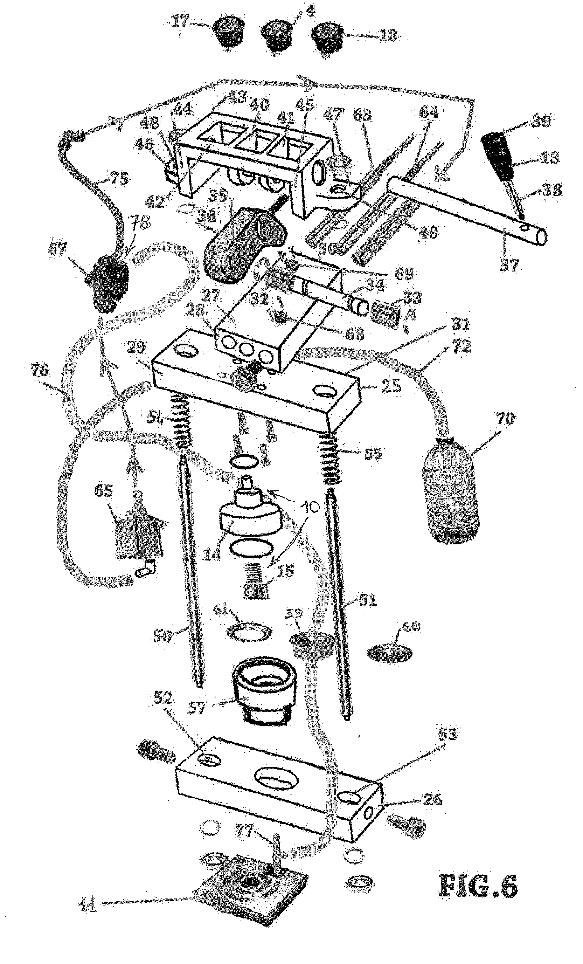

By referring now to the Fig. 6, showing all the disassembled machine component parts, it is noted that the filtering and infusion unit 10 is mounted into a front space delimited between the horizontal upper plate 25, the lower plate 26 and the front wall 7 of the cabinet 6. Now, there are described in detail the lower stationary portion and the upper movable portion of the filtering and infusion unit 10, of which the lower stationary portion is housed in the lower plate 26, from which it is supported, while the movable upper portion is secured below the upper plate 25, in a position corresponding to that of the lower stationary portion, and is displaceable with respect to this latter during the displacement of the upper plate 25 as described previously. Moreover, both the stationary and the movable portions of the filtering and infusion unit 10 are accessible through the upper opening 8 of the front wall 7 of the cabinet 6, when they are displaced in the position which is moved away or approached to each other, in the first case for loading a waffle or a capsule or the powder of the beverage to be prepared, or for ejecting the exhausted waffle after the infusion, and in the second case for carrying out the infusion.

In particular, the lower stationary portion is constituted as usual by a filter supporting body 57 with cylindrical or polygonal shape, made of plastic material or other suitable material, which is housed in the upper part of the lower plate 26 and provided with an inner room (not shown) for preparing and passing the infused beverage, which is communicating through a lower hole (not shown) with the underlying cup support 11, on to which a glass, a cup or another suitable receptacle is disposed, into which the infused beverage being delivered is collected. The upper part of the filter carrying body 57 is shaped for housing a correspondent thin cup 61 acting as support for the capsule containing the metered and pressed powder of the relative beverage to be prepared, or a filter for receiving the loose powder of the beverage to be prepared, or a filter for receiving the paper waffle.

In the Fig. 6 it is noted a filter 59 for receiving the loose powder of coffee or another infused beverage, which when is laid on to the filter carrying body 57 allows to prepare the beverage by infusion in the hot water, which is obtained as it will be described, through such loose powder of beverage. In this Figure, it is noted that such filter 59 may be replaced by a further filter 60 for receiving a paper waffle or by the cup 61 for housing the capsule of plastic or another material, for preparing the beverage by infusion of the hot water through the waffle or the capsule. Therefore, the so constituted filtering and infusion unit is of versatile type and allows to prepare the infused beverages in any manner, by replacing from time to time a filter with another type of filter, which condition cannot be achieved with the current filtering units, which are foreseen solely for receiving loose powder or waffles of a beverage, or loose powder or also capsules of a beverage, and which aren't interchangeable with each other.

Above and in correspondence of the just described lower stationary portion, it is situated the movable upper portion of the filtering and infusion unit 10, which is constituted by a cylindrical head 14 and a valve member 15, secured internally the head 14, and provided for distributing hot water toward such unit, and such component parts are communicating with a heat exchanger 27, formed by a box-like body, which is milled and turned, and contains a conduit crossed by the cold water to be heated and made of a good thermal conductor material, having high thermal inertia, for example of brass or aluminium for alimentary uses, which is secured into a correspondent position on to the upper plate 25, which heat exchanger is heated by one or more electric heating elements, which are constituted by at least a DC voltage powered heating element 63, with a supply voltage for example of 12 or 24 V, and which can be realized with reduced power (for example, 300 W), to which additional heating elements of the same kind may be possibly added.

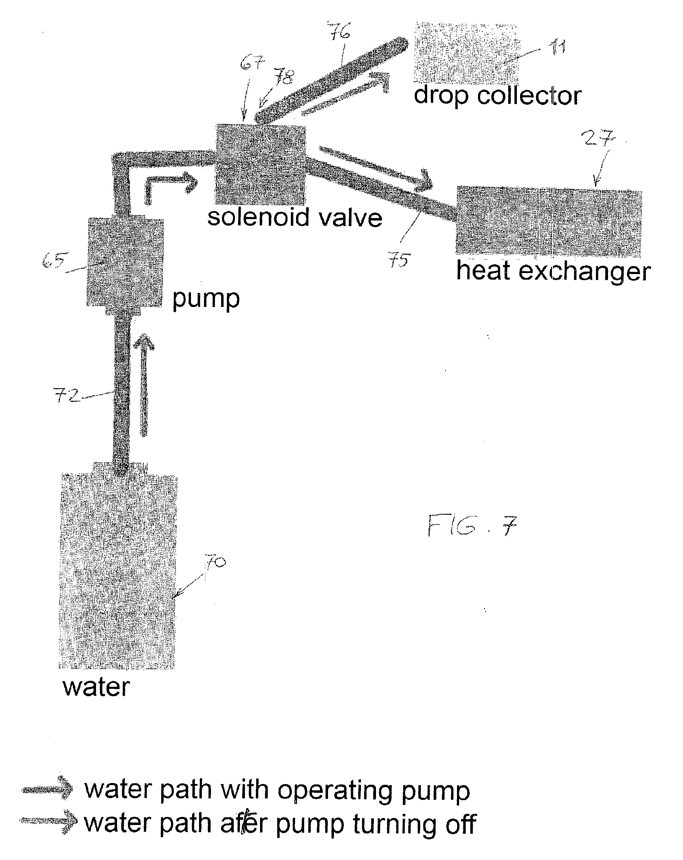

Such heating elements may also be integrated or replaced by at least a further AC voltage powered heating element 64 (for example of 127 or 230 V), which is supplied directly by the electric supply line, independently from the DC voltage powered heating elements. Further functional component parts of the machine are constituted by a pump 65 provided with an electronic device 66 allowing an inlet DC voltage supply (for example, of 12 V), which device is also able to stop the machine operation if the voltage level of the supply battery lowers below a determinate value, such device being able to be connected also to an electronic card (not shown) for controlling the different electric components and set the machine operative cycles. Such electronic card can be connected to the electric control and regulating push-buttons, or equivalent technical means, for example a touch control, which in the example referred to are constituted by the above mentioned push-buttons 17, 18 and 4, provided respectively for switching on and off the machine, and for commutating the electric supply voltage for the DC or AC powered heating elements, and for determining or not determining the hot water delivery for preparing the infused beverage. The machine is also constituted by the following electric component parts :
at least a circulation pump 65, at least a three-way solenoid valve 67 and a set of thermostats, in the example constituted by the thermostats 68 and 69, and the electronic device which is housed, together with the circulation pump 65, into the inner cavity of the machine box-like cabinet, which is opposite to and separated from the cavity for housing the water container 70, while the three-way solenoid valve 67 is situated above the upper plate 25 and the thermostats 68 and 69 are secured above the heat exchanger 27. As particularly visible also from the Fig. 7, the circulation pump 65 is connected with its sucking side, through a flexible conduit 72, to the water container 70, so as to suck the cold water coming from the same container, when the push-button 18 for controlling the delivery of the beverage is actuated, in order to switch on the same pump, and such pump 65 is also connected with its delivery side to the inlet of the solenoid valve 67, which is intercepted by the inner valve member of the same solenoid valve, and the outlet of which is joined to the inlet of the inner conduit of the heat exchanger 27, by way of a suitable flexible conduit 75, of which the outlet of such inner conduit is communicating with the water distributing unit (head 14 and valve member 15).

Moreover, the solenoid valve 67 is also connected with the cup support 11 to an additional flexible conduit 76, through a T shaped pipe fitting 77 made of plastic material, and at the other side such solenoid valve is also joined to the inlet of the inner conduit of the same heat exchanger, so as to discharge water contained inside the same heat exchanger when the delivery of the beverage is ended, and to avoid in this way the limestone to be formed. When the circulation pump 65 is operated, by actuating the control push-button 18 in the switching on position of the pump, the cold water contained into the container 70 is sucked by the same pump through the flexible conduit 72 and conveyed through the flexible conduit 75 into the heat exchanger 27, and at the same time the discharge outlet of the valve toward the flexible conduit 76 is closed, since also the solenoid valve 67 is actuated contemporaneously to the pump 65, and water into such heat exchanger is heated in a short time and then is delivered through the head 14 and the valve member 15 toward the underlying filter, where the infused beverage is produced and then collected in the underlying receptacle.

When, at the end of the delivery cycle, the push-button for delivering the beverage is actuated to stop the delivery and switch the pump 65 off, the solenoid valve 67 is actuated contemporaneously so as to open the discharge way leading to the flexible conduit 76, so that the residual water present into the heat exchanger 27 is discharged into the removable cup support 11, thereby avoiding the risk to form limestone inside the system and therefore ensuring a longer life duration of the same system. Finally, the thermostats 68 and 69 are foreseen for safety reasons and for controlling the temperature of the relative heating elements, and are calibrated for switching them on and off when the respectively preestablished heating temperature is attained, so as to keep always hot the heat exchanger, and thus heating water quickly during each delivery cycle of the desired infused beverage. In the so realized machine, before to start a cycle for preparing a type of beverage, it is necessary to establish if the machine should be loaded with loose powder, or with a waffle or a capsule containing the powdered beverage. To this purpose, under this starting condition the cylindrical head 14 and the valve 15 are displaced by the regulating handle 13 in the raised position moved away with respect to the underlying filter carrying body 57, which is stationary, so that into the capsule support 61 of the filter support 57 it may be introduced the capsule with the metered and pressed powder of the beverage to be prepared, or into the filter support it may be inserted the filter for receiving the paper waffle, or the filter for receiving the loose powder of the beverage to be prepared. As soon as one of these elements for preparing the beverage has been introduced into the filter support 57, the regulating handle 13 is actuated in the lowered position, in a way to displace the cylindrical head 14 and the valve 15 into adhering contact with the filter support 57, and therefore with the cup 61 supporting the capsule or the filter supporting the waffle or the filter supporting the powder.

Afterwards, the infusion cycle is started as described previously, for such a duration as to deliver the desired quantity of the selected beverage into the underlying glass or receptacle. Finally, when the infusion cycle is terminated, the regulating handle 13 is raised, thanks to the thrust of the springs 54 and 55, with consequent extraction of the exhausted element from the cup 61, or of the waffle or the powder, and arrangement of the machine for carrying out a subsequent infusion cycle with the same described criteria. The so constituted machine may be constructed with more reduced and compact dimensions, by dimensioning adequately all the cited component parts and the water container 70, and may be also operated with an electric resistance having even a reduced power (of about 100 W), so as to be installed into very restricted spaces and may be also utilized for example with a specific electric lighter socket for a car.

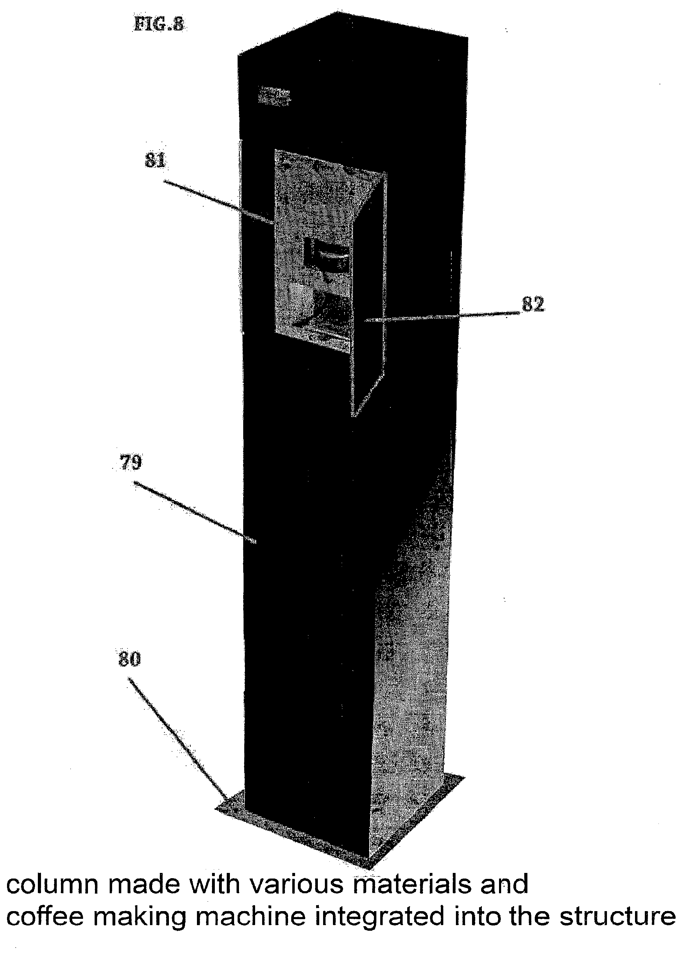

In the Fig. 8 it is now shown the present machine with or without included battery, in which the machine is installed into a vertical lengthened column 79, the structure of which is made based on the metacrylate or plastic material or glass, or painted sheet or stainless sheet, or material of another kind, which column is provided with an enlarged lower base 80 which can be laid into position on to a horizontal surface (floor, foundation, etc..), and in the example illustrated the machine is inserted into a correspondent upper space 81 of the column 79 and is accessible through a front door 82. Such column with the included machine may be advantageously utilized for domestic or commercial use.

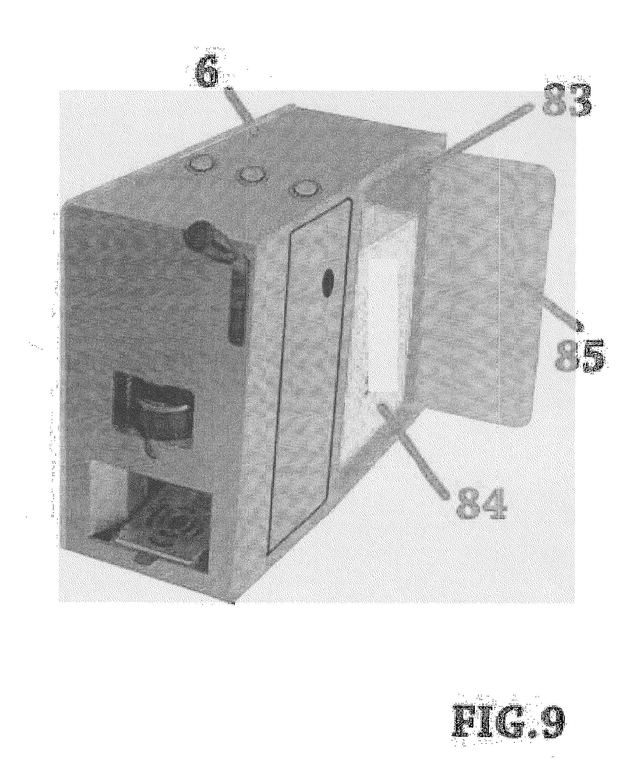

In the Fig. 9 it is shown the machine in a first portable version thereof, in which the machine cabinet 6 is realized with a depth greater than the previous one, so as to define another space 83, adjacent to the space of the water container, into which a battery 84 is housed, and accessible through a front door 85, so as to supply with low DC voltage.

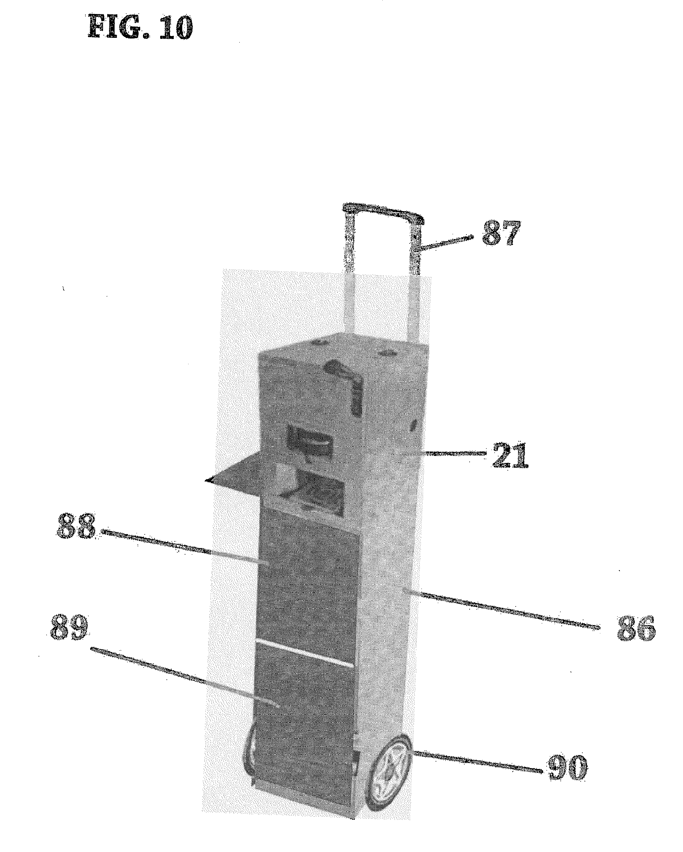

In the Fig. 10 it is shown the machine in a second portable version thereof, mounted on to a vertical transport truck 86, shaped preferably like a hand luggage with an upper handle 87 having an adjustable extension, which truck is shaped with a form lengthened in the vertical direction, and is provided with a set of spaces overlapped to each other, and is provided with a battery which is included into the upper space (not indicated) of the truck, and the water container is always inserted into such space and accessible through a covering plate 21, and the truck is also provided with two additional underlying spaces, accessible through relative front doors 88 and 89 and are adapted to contain the ingredients for preparing the beverages (glasses, powdered beverages, sugar etc..) and any possible article of various kind, and finally some sliding wheels 90 are pivoted in the lower part of the same truck, such truck being able to house also at least a machine for delivering infused beverages of different type and construction.

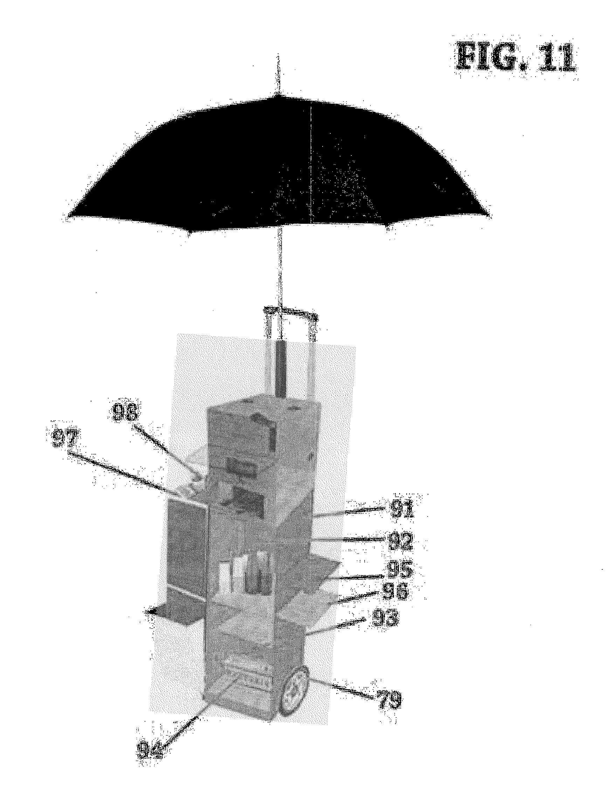

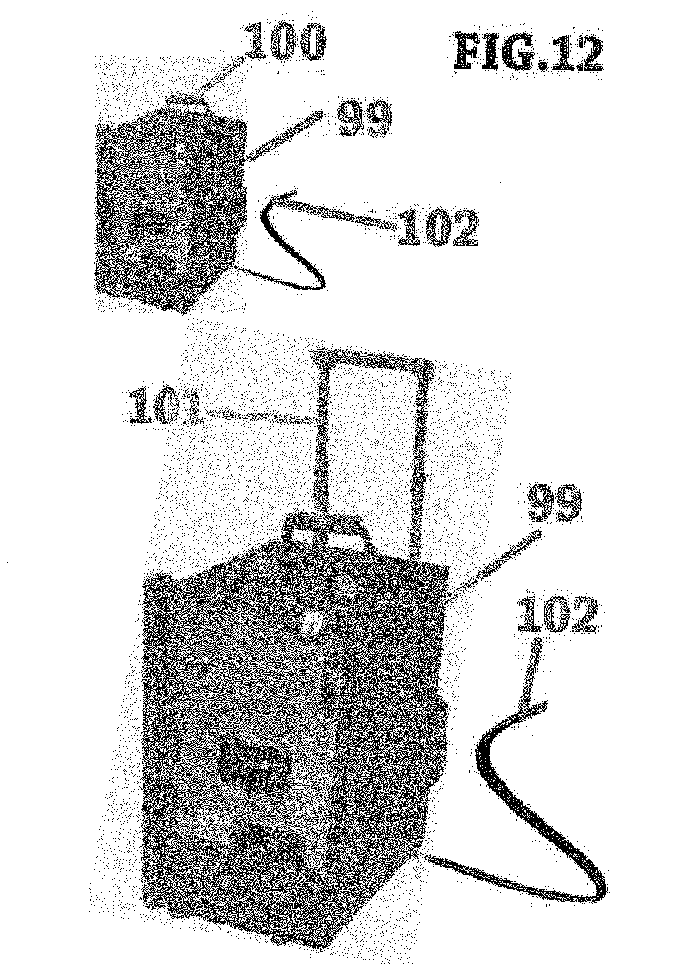

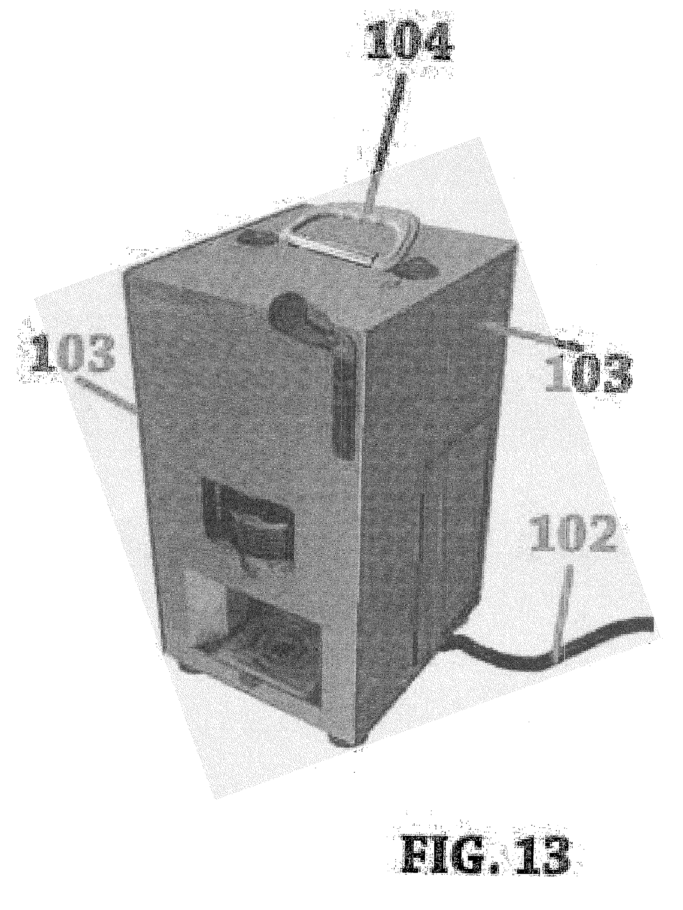

In the Fig. 11 it is shown a machine on a third portable version thereof, again mounted into the upper space of a vertical transport truck 91, identical but higher with respect to the preceding truck 86 of Fig. 10, and provided with two underlying spaces 92 and 93 for housing the ingredients for preparing the beverages and a battery 94. Besides, in this case the truck supports additional overlapped spaces adjacent and literal 95 and 96 and a projected side support 97 for supporting the beverage receptacle 98, and it is covered by an upper umbrella. Of course, the trucks 86 and 91 may be also realized with a horizontal extension instead the vertical one, and with different shapes and dimensions, and may comprise a different number of spaces for containing the ingredients for preparing the infused beverages, and articles of various kind (for example, waste basket etc..) and appliances of different type and construction and with various functions and which can be connected in different manners to the battery, and also for example a mini-refrigerator etc..., and with a sink provided with a tap, pump, supply and discharge reservoirs etc..., and one or more water containers added or alternative to the container 70, and may as well be provided with additional fittings for performing different functions, like protection coverings, pedals for opening the doors of the spaces and the like, thus without departing from the protection sphere of the present invention. In the Fig. 12 it is shown a machine on another portable version thereof, in which it is included into and supported by a protection and transport bag 99, provided with a stationary handle 100 or by a bag 99 provided with an extendable handle 101, and an electric supply cable 102 to supply the electric component parts of the machines of the two bags, while in the Fig. 13 it is shown a machine of portable type, provided with two side walls 103, an upper grasping handgrip 104 and an electric supply cable 102.

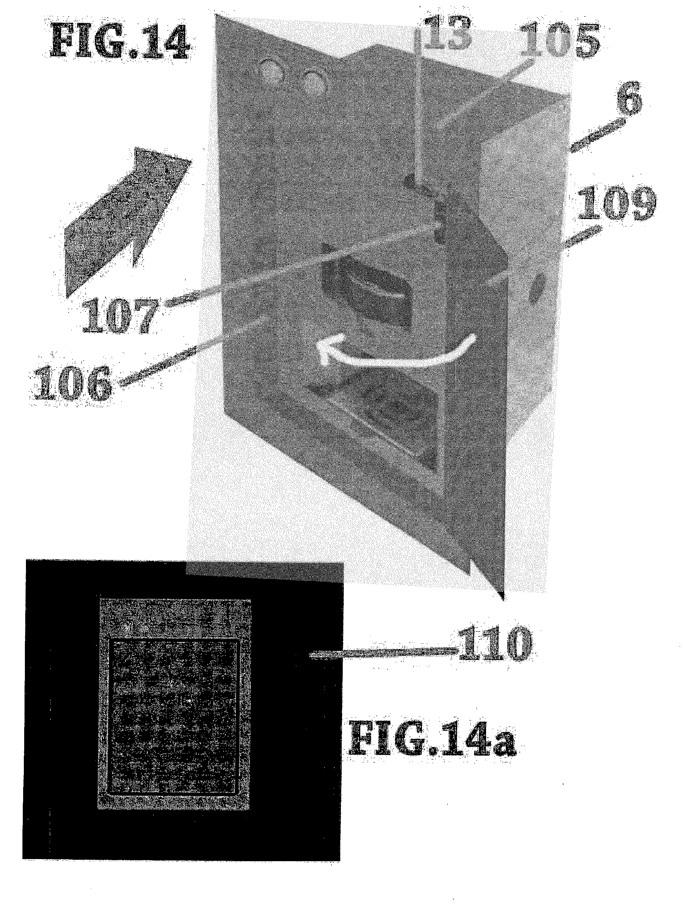

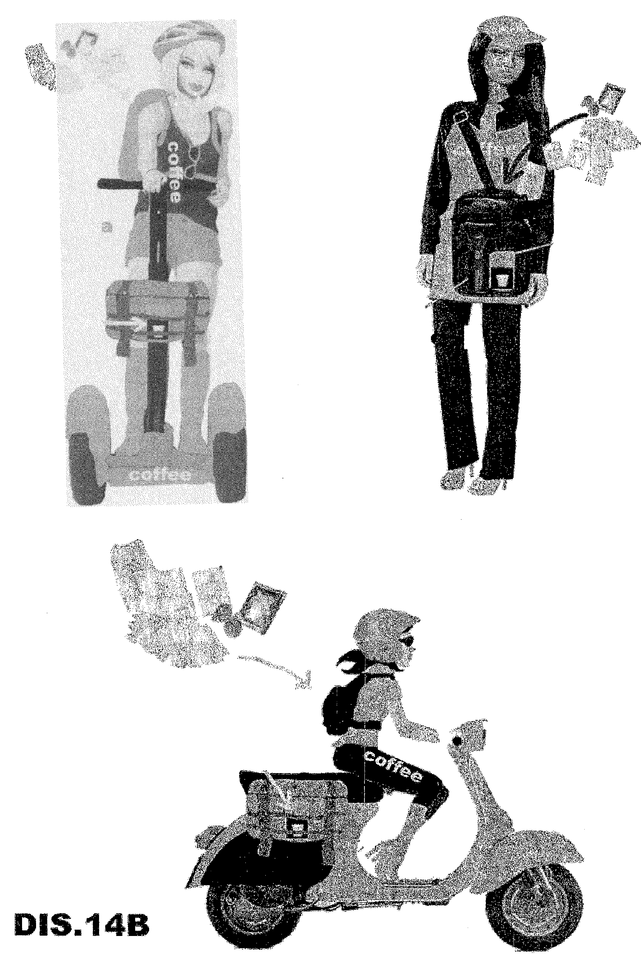

Finally, in the Fig. 14 it is shown a machine on the built-in version thereof, and the cabinet 6 of which is arranged for being built into a wall, the furniture etc.., and to this purpose a peripheral frame 105 is secured to the front part of the machine cabinet 6, which frame is projected outward and is larger than the machine front wall, and made of various materials such as for example glass or steel, and a central through opening 106 for accessing the machine is provided through the frame 105, together with a through opening 107 for the regulating handle 13, and the machine is also provided with an electric supply cable (not indicated), while the opening 106 may be closed by a correspondent door 109.

In the Fig. 14 a it is shown an example of the built-in machine, in which the assembly frame-machine is built into a correspondent opening provided through a vertical wall 110 of a room. Such machine may be provided with rails for extracting and filling up the container 70, or it may be placed on a stationary position and the container may be separated from the same machine and disposed on an area where it may be easily filled up, or alternatively the machine may be supplied directly by the hydraulic supply line, for example of the plant of a watercraft or a camper or a Pullman car.

Of course, the machine may be also additionally coupled to steam elements for preparing white coffee. In the Fig. 14 a there are visible additional applications of the bags containing the machines, batteries and accessories (coffee, sugar, leaflets etc...), which bags are worn directly by the operator, or may be applied for example to motorcycles, or to other transport means and in such case they may be also supplied by the batteries of the same locomotive means. The here described machine for delivering the infuses and the transport trucks are utilizable also for advertising uses and are utilizable both on to public and private areas, for example in case of sport events or another kind of events and in the occasion of fairs or for example in the interior of supermarkets for selling coffee, in case also combined with the sale and gift of other products and foods or for free tasting of the same coffee, for example for promoting coffee shops to the public, and they can be easily utilizable as means for promoting specific brands. For example, instead of providing a common gadget to the public, it is possible to offer a coffee + a leaflet advertising a determinate product or a determinate trade-mark, for example Italian trade-mark, and in this case the trucks, the bags etc...become actual marketing complex instruments, in that the coffee has the advantage to represent the "made in Italy" and the Italian cooking in the world, thereby allowing to create actual enterprises with territorial network even international of collaborators with various kinds of contracts (for example franchising) with the purpose of sale and/or gift, and/or advertising promotion and marketing.

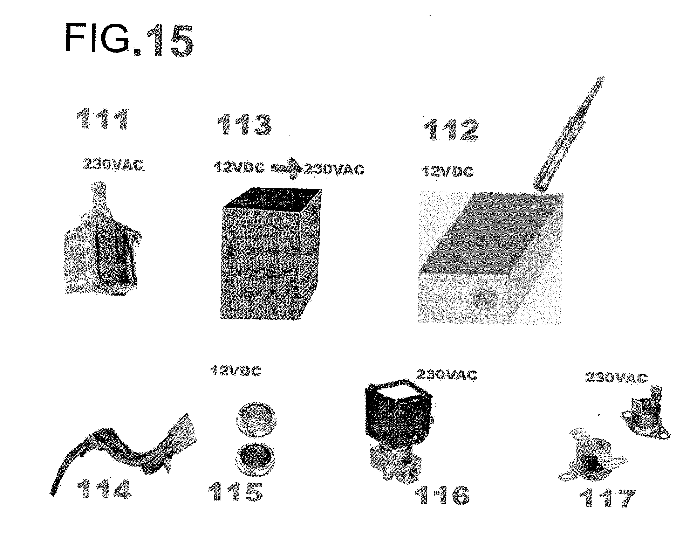

In the Fig. 15 there are illustrated schematically the main electric components of the coffee making machine, and it may be understood that the invention may be applied also to other coffee making machines with different frames, shapes and infusion units.

The core of the present invention, as above described, is substantially the combination of an AC voltage powered pump 111 (for example 239 VAC) + a resistance with lower power 112 (for example, 100 W), powered with low DC voltage (for example, 12 VDC), which may be made also in a different manner and included or integral with a heat exchanger (also made in a different manner) and in case coupled to other resistances having different voltages and powers + an electronic component 113 supplied with a low DC voltage (for example, 12 VDC), capable to convert the voltage needed for supply the pump from DC voltage (for example 12 VDC) to AC voltage (for example 230 VAC).

Since this pump has also a reduced power, said electronic component 113 may be very small and have reduced power and may be easily installed not only in the interior of the frame of the machine here illustrated, but also in the interior of machines having frames, thermal units and infusion units which are different, taking into account that the core of this kind of coffee making machines is always constituted by a pump + a thermal unit with resistance + one or more thermostats + a solenoid valve.

Therefore, the invention of the present electric circuit may be applied also to machines which are different than the machine here illustrated (having different frames, thermal units, infusion units, push-buttons and controls etc...), thus without departing from the protection sphere of the present patent. For applying the present patent to said machines it is sufficient
a) to replace the installed electric resistance and powered by AC voltage (for example 230 VAC), with a resistance 112 having the design identical or similar to that installed, but powered with low DC voltage (for example 12 VDC) ;
b) to replace the installed push-buttons operating with AC voltage (for example 230 VAC) with push-buttons 115 operating with low DC voltage (for example 12 VDC);
c) to replace the existing harness wires with harness wires 114 having adequate cross-section for the new component parts ; and finally
d) to house in the interior of the machine frame the electric component 113 converting the supply voltage from low DC voltage (for example 12 VDC) to AC voltage (for example 230 VAC), for supplying the pump 111 which isn't replaced.

In the case in which one intends simply to maintain the operation with AC voltage (for example 230 VAC) and lower the power, on the contrary it is sufficient to replace the electric resistance (for example with 500 W power) with an electric resistance 112 having design identical or similar, but operating with a lower power (for example 100 W).

The solenoid valve 116 and the thermostat (s) 117 aren't replaced in that they are always operating with AC voltage (for example 230 VAC).

## Claims

1. Low DC voltage and/or AC voltage powered machine for preparing espresso coffee or other infused beverages, and of compact and stationary type or transportable on different positions and places, adapted to be installed into means for inhabited uses, campers, caravans, motor-homes, different kinds of boats, commercial and industrial vehicles such as for example motor-bus, motor coaches, trains, airplanes, trucks, motor-vehicles for private or public use, for domestic or public uses, catering, vending, and other applications, the machine being arranged for preparing coffee and several kinds of infused beverages, such as for example white coffee, barley, tea, camomile, liquid foods etc.., by utilizing the loose powder of such beverages or the waffles or the capsules containing such powder, metered and pressed in the best way, and constituted by a box-like shaped cabinet (6) with reduced and compact dimensions, having a limited height and width and depth smaller than those of the height, which cabinet is composed of various profiled parts which are joined removably to each other in a per se known manner, and adapted to house at least a filtering and infusion unit (10) for the preparation of the respective desired infused beverage and for the distribution of the prepared infused beverage, a removable cup support (11) adapted to support the cup or the glass where the beverage distributed by the unit is poured, a regulating handle (13), co-operating with the filtering and infusion unit (10) for moving a part thereof, same, and a water circulation circuit communicating with water containing means (70) for preparing the beverages, pumping means (65), water heating means (63, 64) co-operating with heat exchanger means (27), and control means (4, 17, 18) for controlling the various operative cycles of the machine and for turning on and off the same machine, **characterized by** a metallic of other material box-like shaped structure, formed by an upper flat plate (25), and by another lower flat plate (26), spaced away vertically from the plate (25) and joined with the same by means of joining means (bars 50, 51) and sprung means (54, 55), adapted to maintain said upper plate (25) always lifted up from said lower plate (26), said plates (25, 26) being enclosed by the peripheral walls of the box-like shaped cabinet (6), a further metallic flat plate (27) being secured on said upper plate (25), constituting said heat exchanger means, support means (32,33) being arranged onto the upper surface of said further flat plate (27), in which a correspondent horizontal pivot (34) is inserted and supported, which is passing through a correspondent axial through hole (35) of a metallic rectilinear arm (36), the other end portion of which is joined with a lengthened arm (37) of said regulating handle (13), which lengthened arm (37) is joined with an additional lengthened cylindrical arm (38) provided with a handgrip (39), said lengthened arm (37) being housed on and supported by correspondent support means (40, 41), secured to the lower part of a metallic load bearing structure (43), constituted also by two vertical portions (44, 45) bent for forming two horizontal projections (46, 47), provided with a respective vertical through hole (48, 49), said load bearing structure (43) being able to be raised and lowered ; **characterized in that** said filtering and infusion unit (10) is constituted by a stationary lower part (57), and by a movable upper part (14, 15) co-operating to each other, said stationary lower part (57) being adapted to receive the waffle support filter (60), or the support for the loose ground substance for the infusion (59), or an appropriate waffle supporting cup (61) ; and **characterized in that** said water heating means comprise at least a low DC voltage powered electric heating element (63) and at least a further AC voltage (127 or 230 V) powered heating elements (64), and that valve means (67) are provided for deviating the water flow into the circulation circuit, and thermostatic means (68, 69) are provided for regulating the heating temperature of said heating elements (63, 64), the machine being arranged in such a way that in each infusion cycle into said filtering and infusion unit (10) it is at first loaded the relative substance for preparing the infused beverage, then said regulating handle (13) is pushed in the inclined position thereof and displaced downward, with the consequent compression downward of said upper plates (25, 27), against the action of said elastic means (54, 55), until said movable upper part (14, 15) comes into contact with said stationary lower part (57), and in this position the infusion cycle is started, during that said regulating handle (13) is always kept in this lowered position, up to the end of the infusion and the delivery of the beverage on the established doses, and such regulating handle (13) is then released and returns itself automatically, with a raising movement reverse than the previous one, to the starting raised position thereof, thanks to the upward push exerted by said elastic means (54, 55) on to said upper plate (25), so that the exhausted waffle of the just prepared beverage may be removed from the component parts of said filtering and infusion unit (10), thereby arranging the machine for carrying out a further infusion cycle.

2. Machine according to claim 1, **characterized in that** into the back part of said upper plate (25) and said lower plate (26) it is arranged a separating and vertical flat metallic wall (56), which delimits both the inner cavity for housing the water containing means (70) and an additional inner cavity for housing the machine functional component parts.

3. Machine according to claim 1, **characterized in that** said filtering and infusion unit (10) is assembled into a front space delimited between said upper plate (25), said lower plate (26) and the front wall (7) of the cabinet (6), and is accessible through an upper opening (8) of said front wall (7).

4. Machine according to claim 3, **characterized in that** said filter carrying body (57) is shaped with a cylindrical or polygonal form, made of plastic material or other suitable material, and is secured to the upper surface of said lower plate (26) and provided with an inner chamber for the preparation and the passage of the infused beverage, which is communicating through a lower hole with the underlying cup support (11), upon which a glass, a cup or other suitable container is placed, into which the infused beverage which is delivered is collected.

5. Machine according to claim 4, **characterized in that** in the upper part and in correspondence of said stationary lower part (57) it is situated the movable upper part of said filtering and infusion unit (10), which is constituted by a cylindrical head (14) and a valve (15), secured internally the head (14), and provided for the distribution of the hot water through such unit, and these component parts are communicating with said heat exchanger means (27).

6. Machine according to claim 5, **characterized in that** said pumping means are constituted by at least a pump (65) provided with electronic control means, which allow a DC input voltage supply (for example, of 12 V), and are also adapted to stop the machine operation if the voltage level of the supply battery goes down a determinate value, said electronic control means being further able to be connected also to an electronic card for controlling the different electric components and for setting the machine operative cycles and able to be connected to said control means (17, 18, 4), provided respectively for switching on and off and for commutating the electric supply towards said first DC voltage powered heating element (63) or said additional AC voltage powered heating element (64), and for providing or not providing to deliver the hot water for preparing the infused beverage.

7. Machine according to claim 6, **characterized in that** said valve means comprise at least a three-way solenoid valve (67) situated above said upper plate (25) and the inlet of which, intercepted by the inner valve member of the same solenoid valve, is connected with the delivery side of said pump (65), and a first outlet of which is joined through a flexible conduit (75), to the inlet of the inner conduit of said heat exchanger means (27), whereof the outlet of such inner conduit is communicating with said water delivering unit (14, 15), and a second outlet (78) of said solenoid valve (67) is further connected to said cup support (11) with an additional flexible conduit (76), through a T shaped pipe fitting (77) made of plastic material, for discharging the water contained into said heat exchanger means (27) at the end of the beverage delivery, and to avoid in this manner the formation of limestone.

8. Machine according to the previous claims, **characterized in that** it is able to be installed into a space (81) accessible through a front door (82) of a vertical elongated column (79), the structure of which is made based on the methacrylate or plastic material or glass, or painted sheet or stainless sheet, or material of another kind, which column is provided with an enlarged lower base (80) which can be laid into position on to a horizontal surface, said machine being installable also into a vertical transporting truck (86) provided with an upper handle (87) and a set of spaces overlapped to each other, and with a battery and any possible sliding wheels (90), said machine being also installable into an additional transporting truck (91) analogous to said truck (86) and provided with additional spaces (95, 96) arranged adjacent and sidewise to each other and with a laterally projected support (97) for laying the beverage container (98) thereon.

9. Machine according to the previous claims, **characterized in that** the machine cabinet (6) is made with a depth greater than the previous one, so as to define another space (83), adjacent to the space of the water container, into which a battery (84) is housed, which is accessible through a front door (85), for supplying with low DC voltage all the electric component parts of the same machine.

10. Machine according to the previous claims, characterized for being included into and supported by a protective and transporting bag (99), provided with a stationary handle (100), or provided with an extensible handle (101), and one electric supply cable (102) for the electric component parts of the machines of the two bags (99).

11. Machine according to the previous claims, characterized for being made of portable type, provided with two side walls (103), an upper handgrip (104) and one electric supply cable (102).

12. Machine according to the previous claims, characterized for being of the built-in type, the cabinet (6) of which is arranged for being built into a wall, the furniture etc..., and to the front wall of the same cabinet a peripheral frame (105) is secured, which is projected outward and is larger than the machine front wall and made with different materials such as for example glass or steel, and through the frame (105) a central through opening (106) is provided for the access to the machine and a through opening (107) is provided for said regulating handle (13), and the machine is also provided with an electric supply cable, whereas the opening (106) may be closed by a correspondent lid (109).

13. Machine according to the previous claims, **characterized in that** to be installed into bags containing the batteries and various accessories (ex. coffee, sugar, leaflets, etc.), which bags are directly worn by the operator, or applied for example to motorcycles, or to other transport means and in such case they may be also supplied by the batteries of the same locomotive means.

14. Machine according to the previous claims, **characterized in that** said pumping means (111) may be coupled also to at least a low DC voltage powered electronic component (113) (for example, of 12 VDC) and capable to convert the needed voltage for supplying the pump from the DC to the AC supply voltage.

## Patentansprüche

1. Von geringer Gleichspannung und/oder Wechselspannung angetriebene Maschine zur Zubereitung von Espressokaffee oder anderen Aufgussgetränken, von kompakter oder stationärer Art oder transportabel zu verschiedenen Positionen und Plätzen, geeignet zum Einbau in Einrichtungen zu Wohnzecken, Camper, Caravane, Wohnmobile, verschiedene Arten von Booten, kommerzielle und industrielle Fahrzeuge wie z.B. Kraftfahrzeugbusse, Reisebusse, Züge, Flugzeuge, Lastwagen, Kraftfahrzeuge zur privaten oder öffentlichen Benutzung, für häusliche oder öffentliche Benutzungen, Catering, Verkauf oder andere Anwendungen, wobei die Maschine angeordnet ist, um Kaffee und verschiedene Arten von Aufgussgetränken zuzubereiten, beispielsweise weißen Kaffee, Gerste, Tee, Kamille, flüssige Nahrungsmittel etc. durch Verwendung des Iosen Pulvers solcher Getränke oder der Waffeln oder Kapseln, die solches Pulver enthalten, abgemessen und auf beste Weise gepresst, ausgebildet durch ein kastenartig geformtes Gehäuse (6) mit verringerten und kompakten Abmessungen mit einer begrenzten Höhe und Breite und Tiefe, die kleiner ist als diejenige der Höhe, wobei das Gehäuse aus verschiedenen profilierten Teilen zusammengesetzt ist, die lösbar voneinander auf an sich bekannte Weise zusammengesetzt sind, dazu geeignet, wenigstens eine Filter- und Aufgusseinheit (10) zum Zubereiten des jeweils gewünschten Aufgussgetränks und zum Verteilen des hergestellten Aufgussgetränks, eine lösbare Tassenhalterung (11), die die Tasse oder das Glas hält, in das das durch die Einheit verteilte Getränk ausströmt, einen Reguliergriff (13), der mit der Filter- und Aufgusseinheit (10) zusammen wirkt, um einen Teil davon zu bewegen, und einen Wasserzirkulationskreis, der mit einer Wasser enthaltenden Einrichtung (70) zum Zubereiten der Getränke zusammenwirkt, Pumpenmittel (65), Wassererhitzungsmittel (63, 64), die mit Wärmetauschermittel (27) zusammenwirkt und Steuermittel (4, 17, 18) zum Steuern der verschiedenen Betriebszyklen der Maschine und zum Einschalten und Ausschalten der Maschine enthält,
**gekennzeichnet durch** eine metallische oder aus anderem Material bestehende kastenartig geformte Struktur, geformt **durch** eine obere flache Platte (25) und **durch** eine untere flache Platte (26), die vertikal von der Platte (25) beabstandet und mit dieser **durch** Verbindungsmittel (Stangen 50, 51) und Federmittel (54, 55) verbunden ist, die geeignet sind, die obere Platte (25) stets von der unteren Platte (26) anzuheben, wobei die Platten (25) **durch** die Umfangswände des kastenartig geformten Gehäuses (6) umschlossen sind, wobei eine weitere metallische flache Platte (27) auf der oberen Platte (25) befestigt ist und die Wärmetauschermittel bildet, wobei Tragmittel (32, 33) auf der oberen Fläche der weiteren flachen Platte (27) angeordnet sind, in die ein zugehöriger horizontaler Zapfen (34) eingesetzt und gelagert ist, der **durch** ein zugehöriges axiales Durchgangsloch (35) eines metallischen geradlinigen Arms (36) verläuft, dessen anderer Endabschnitt mit einem länglichen Arm (37) des Regulierungsgriffs (13) verbunden ist, wobei der längliche Arm (37) mit einem weiteren länglichen zylindrischen Arm (38) verbunden ist, der mit einem Handgriff (39) versehen ist, wobei der längliche Arm (37) **durch** zugehörige Tragmittel (40, 41) aufgenommen und gehalten ist, die an dem unteren Teil einer metallischen, Last tragenden Struktur (43) befestigt ist und auch **durch** zwei vertikale Abschnitte (44, 45) gebildet ist, die gebogen sind, um zwei horizontale Vorsprünge (46, 47) zu bilden, versehen jeweils mit einem vertikalen Durchgangsloch (48, 49), wobei die Last tragende Struktur (43) angehoben und abgesenkt werden kann;
**dadurch** gekennzeichnet, dass die Filter- und Aufgusseinheit (10) **durch** einen stationären unteren Teil (57) und **durch** einen beweglichen oberen Teil (14, 15) gebildet ist, die zusammen wirken, wobei der stationäre untere Teil (57) geeignet ist, den Waffelhaltefilter (60) aufzunehmen oder die Halterung für die lose Grundsubstanz für den Aufguss (59) oder eine geeignete Waffeltragtasse (61); und **dadurch** gekennzeichnet, dass die Wasserheizmittel wenigstens ein mit geringer Gleichspannung betriebenes elektrisches Heizelement (63) und wenigstens ein weiteres, **durch** Wechselspannung (127 oder 230 V) betriebenes Heizelement (64) aufweist, und dass Ventilmittel (67) vorgesehen sind, um den Wasserstrom in den Zirkulationskreis abzulenken, und thermostatische Mittel (68, 69) vorgesehen sind, um die Heiztemperatur der Heizelemente (63, 64) zu regulieren, wobei die Maschine auf solche Weise angeordnet ist, dass bei jedem Aufgusszyklus in die Filter- und Aufgusseinheit (10) diese zuerst mit der zugehörigen Substanz zum Zubereiten des Aufgussgetränks geladen wird, dann der Reguliergriff (13) in seine geneigte Lage gedrückt und nach unten bewegt wird, mit der damit verbundenen Kompression der oberen Platten (25, 27) nach unten gegen die Wirkung der elastischen Mittel (54, 55), bis der bewegbare obere Teil (14, 15) in Kontakt mit dem stationären unteren Teil (57) gerät, wobei in dieser Position der Aufgusszyklus gestartet wird, während dem der Reguliergriff (13) stets in dieser unteren Position gehalten wird bis zu dem Ende des Aufgusses und der Abgabe des Getränks in den eingerichteten Dosierungen, wobei der Reguliergriff (13) dann frei gegeben wird und automatisch mit einer ansteigenden Bewegung, die umgekehrt zu der vorherigen ist, in die angehobene Startposition zurückkehrt, infolge des von den elastischen Mitteln (54, 55) auf die obere Platte (25) nach oben ausgeübten Drucks, so dass die verbrauchte Waffel des gerade zubereiteten Getränks aus den Bestandteilen der Filter- und Aufgusseinheit (10) entfernt werden kann, wodurch die Maschine zur Ausführung eines weiteren Aufgusszyklus bereit ist.

2. Maschine nach Anspruch 1,
**dadurch gekennzeichnet, dass** in dem rückwärtigen Teil der oberen Platte (25) und der unteren Platte (25) eine separate und vertikale flache, metallische Wand (56) angeordnet ist, die sowohl den Innenraum zum Unterbringen der Wasseraufnahmemittel (70) als auch einen zusätzlichen Innenraum zum Unterbringen von funktionalen Bestandteilen der Maschine begrenzt.

3. Maschine nach Anspruch 1,
**dadurch gekennzeichnet,**
**dass** die Filter- und Aufgusseinheit (10) in einem vorderen Raum zusammengesetzt ist, der durch die obere Platte (25), die untere Platte (26) und die Vorderwand (7) des Gehäuses (6) begrenzt und durch eine obere Öffnung (8) in der Vorderwand (7) zugänglich ist.

4. Maschine nach Anspruch 3,
**dadurch gekennzeichnet,**
**dass** der Filtertragkörper (57) eine zylindrische oder polygonale Form hat und aus Kunststoffmaterial oder einem anderen geeigneten Material besteht und auf der Oberseite der unteren Platte (26) befestigt und mit einer Innenkammer zum Zubereiten und Durchgang des Aufgussgetränks versehen ist, das durch ein unteres Loch mit der darunter liegenden Tassenhalterung in Verbindung steht, auf die ein Glas, eine Tasse oder ein geeigneter Behälter platziert wird und in den das Aufgussgetränk abgegeben und darin gesammelt wird.

5. Maschine nach Anspruch 4,
**dadurch gekennzeichnet, dass** in dem oberen Teil und in Übereinstimmung des stationären unteren Teils (57) der bewegbare obere Teil der Filter- und Aufgusseinheit (10) angeordnet ist, die durch einen zylindrischen Kopf (14) und ein Ventil (15) gebildet ist, das innen an dem Kopf (14) befestigt ist und für die Verteilung des heißen Wassers durch die Einheit vorgesehen ist, wobei diese Bauteile mit den Wärmetauschermitteln (27) verbunden sind.

6. Maschine nach Anspruch 5,
**dadurch gekennzeichnet, dass** die Pumpenmittel durch wenigstens eine Pumpe (65) gebildet sind, die mit einer elektronischen Steuereinrichtung versehen ist, die eine Gleichstromspannungszufuhr (beispielsweise von 12 V) zulässt und außerdem geeignet ist, den Maschinenbetrieb zu stoppen, wenn der Spannungslevel der Versorgungsbatterie unter einen vorbestimmten Wert fällt, wobei die elektronische Steuereinrichtung außerdem in der Lage ist, mit einer elektronischen Karte zum Steuern verschiedener elektrischer Komponenten verbunden zu werden und die Betriebszyklen der Maschine einzustellen und um mit den Steuermitteln (17, 18, 4) verbunden zu werden, die vorgesehen sind, ein und aus zu schalten und die elektrische Versorgung zu dem ersten mit Gleichspannung betriebenen Heizelement (63) oder dem zusätzlichen von Wechselspannung betriebenen Heizelement (64) umzuschalten, um das heiße Wasser zum Zubereiten des Aufgussgetränks zu liefern.

7. Maschine nach Anspruch 6,
**dadurch gekennzeichnet, dass** die Ventilmittel wenigstens ein Drei-Wege-Solenoidventil (67) aufweisen, das oberhalb der oberen Platte (25) angeordnet ist und dessen Einlass, aufgefangen durch das innere Ventilelement des Solenoidventils, mit der Abgabeseite der Pumpe (65) verbunden ist, und dass ein erster Ausgang davon über eine flexible Leitung (75) mit dem Einlass der inneren Leitung der Wärmetauschermittel (27) verbunden ist, wobei der Auslass der inneren Leitung mit der Wasserliefereinheit (14, 15) verbunden ist, und wobei ein zweiter Auslass (78) des Solenoidventils (64) außerdem mit der Tassenhalterung (14) mit einer weiteren flexiblen Leitung (76) durch ein T-förmiges Rohrfitting (77) aus Kunststoffmaterial verbunden ist, um das Wasser, das am Ende der Getränkezufuhr sich in den Wärmetauschermitteln (27) befindet, abzuführen, um auf diese Weise die Bildung von Kalkstein zu vermeiden.

8. Maschine nach den vorhergehenden Ansprüchen,
**dadurch gekennzeichnet, dass** sie in einen Raum (81) einbaubar ist, der durch eine Vordertür (82) einer vertikalen, lang gestreckten Säule (79) zugänglich ist, deren Struktur auf der Basis von Methacrylat oder Kunststoffmaterial oder Glas oder bemaltem Blech oder rostfreiem Blech oder Material anderer Art besteht, wobei die Säule mit einer vergrößerten unteren Basis (80) versehen ist, die auf eine horizontale Fläche gelegt werden kann, wobei die Maschine auch in ein vertikales Transportgestell (86) einbaubar ist mit einem oberen Handgriff und einem Satz sich überlappender Innenräume, und mit einer Batterie und allen möglichen Laufrädern (90), wobei die Maschine auch in ein weiteres Transportgestell (91) analog zu dem Gestell (86) einbaubar ist und mit zusätzlichen Räumen (95, 96) versehen sein kann, die benachbart und seitlich zueinander mit seitlich vorstehenden Halterungen (97) versehen ist, um den Getränkebehälter (98) darauf zu legen.

9. Maschine nach den vorhergehenden Ansprüchen,
**dadurch gekennzeichnet, dass** das Maschinengehäuse (6) eine größere Tiefe hat als das vorherige, um so einen weiteren Raum (83) nahe dem Raum des Wasserbehälters zu begrenzen, in dem eine Batterie (84) untergebracht ist, die durch eine Vordertür (85) zugänglich ist, um mit geringer Gleichspannung alle elektrischen Komponenten der Maschine zu versorgen.

10. Maschine nach den vorhergehenden Ansprüchen,
**dadurch gekennzeichnet, dass** sie in eine Schutz- und Transporttasche (99) eingeschlossen ist, die mit einem stationären Griff (100) oder mit einem ausfahrbaren Griff (110) und mit einem elektrischen Versorgungskabel (102) für die elektrischen Bauteile der Maschine der zwei Taschen (99) versehen ist.

11. Maschine nach den vorhergehenden Ansprüchen,
**dadurch gekennzeichnet, dass** sie von dem tragbaren Typ ist, versehen mit zwei Seitenwänden (103), einem oberen Handgriff (104) und einem elektrischen Versorgungskabel (102).

12. Maschine nach den vorhergehenden Ansprüchen,
**dadurch gekennzeichnet, dass** sie von dem Einbautyp ist, wobei ihr Gehäuse dazu vorgesehen ist, in eine Wand, ein Möbelstück etc. eingebaut zu werden, und wobei ein Umfangsrahmen (105) an seiner Vorderwand befestigt ist, der nach außen vorsteht und größer ist als die Vorderwand der Maschine und aus verschiedenen Materialien wie beispielsweise Glas oder Stahl besteht, wobei durch den Rahmen (105) eine zentrale Durchgangsöffnung (106) führt für den Zugang zu der Maschine, und wobei eine Durchgangsöffnung (107) für den Reguliergriff (13) vorgesehen ist und die Maschine außerdem ein elektrisches Versorgungskabel enthält, wobei die Öffnung (160) durch einen zugehörigen Deckel (109) verschließbar ist.

13. Maschine nach den vorhergehenden Ansprüchen,
**dadurch gekennzeichnet, dass** sie in Taschen mit den Batterien und verschiedenem Zubehör (z.B. Kaffee, Zucker, Merkblätter etc.) installiert ist, wobei die Taschen direkt von der Bedienungsperson getragen werden oder beispielsweise an Motorrädern oder anderen Transportmitteln angebracht sind, wobei sie in einem solchen Fall durch die Batterie der Transportmittel versorgt werden können.

14. Maschine nach den vorhergehenden Ansprüchen,
**dadurch gekennzeichnet, dass** die Pumpenmittel (111) mit wenigstens einer von niedriger Gleichspannung betriebener elektronischen Komponente (113) beispielsweise von 12 VDC gekoppelt sein und fähig sein können, die notwendige Spannung zur Versorgung der Pumpe von der Gleichspannung zu der Wechselspannung umzuwandeln.

## Revendications

1. Machine alimentée par une basse tension continue et/ou une tension alternative pour préparer du café expresso ou d'autres boissons infusées, et d'un type compact et fixe ou transportable à différentes positions et différents emplacements, conçue pour être installée dans des moyens à usage d'habitation, des campings, des caravanes, des camping-cars, différents types de bateaux, des véhicules commerciaux et industriels, tels que par exemple des bus, des cars, des trains, des avions, des camions, des véhicules automobiles pour des utilisations privées ou publiques, pour des utilisations domestiques ou publiques, et des applications de restauration, de distribution et autres, la machine étant agencée pour préparer du café et plusieurs types de boissons infusées, tels que par exemple du café au lait, une décoction d'orge, du thé, de la camomille, des aliments liquides etc., en utilisant la poudre en vrac de ces boissons ou les pastilles ou les capsules contenant cette poudre, dosée et pressée de la meilleure manière, et constituée d'une armoire d'une forme similaire à une boîte (6) avec des dimensions réduites et compactes, ayant une hauteur limitée et une largeur et une profondeur inférieures à la hauteur, laquelle armoire est composée de diverses parties profilées qui sont jointes de manière amovible les unes aux autres d'une manière connue intrinsèquement, et conçue pour loger au moins une unité de filtration et d'infusion (10) pour la préparation de la boisson infusée souhaitée respective et pour la distribution de la boisson infusée préparée, d'un support de tasse amovible (11) conçu pour supporter la tasse ou le verre dans lequel la boisson distribuée par l'unité est déversée, d'une poignée de régulation (13) fonctionnant conjointement avec l'unité de filtration et d'infusion (10) pour déplacer une partie de celle-ci, et d'un circuit de circulation d'eau communiquant avec des moyens contenant de l'eau (70) pour préparer les boissons, des moyens de pompage (65), des moyens de chauffage d'eau (63, 64) fonctionnant conjointement avec des moyens d'échange de chaleur (27), et des moyens de commande (4, 17, 18) pour commander les divers cycles de fonctionnement de la machine et pour activer et désactiver la susdite machine, **caractérisée par** une structure d'une forme similaire à une boîte métallique ou en un autre matériau, formée par une plaque plate supérieure (25), et par une autre plaque plate inférieure (26), espacée verticalement de la plaque (25) et jointe à la susdite à l'aide de moyens de jonction (barres 50, 51) et de moyens élastiques (54, 55), conçus pour maintenir ladite plaque supérieure (25) toujours soulevée par rapport à ladite plaque inférieure (26), lesdites plaques (25, 26) étant enfermées par les parois périphériques de l'armoire d'une forme similaire à une boîte (6), une autre plaque plate métallique (27) étant fixée sur ladite plaque supérieure (25), constituant lesdits moyens d'échange de chaleur, les moyens de support (32, 33) étant agencés sur la surface supérieure de ladite autre plaque plate (27), dans laquelle un pivot horizontal (34) correspondant est inséré et supporté, lequel passe à travers un trou traversant axial (35) correspondant d'un bras rectiligne métallique (36), dont l'autre partie d'extrémité est jointe à un bras allongé (37) de ladite poignée de régulation (13), lequel bras allongé (37) est joint à un bras cylindrique allongé supplémentaire (38) pourvu d'une poignée (39), ledit bras allongé (37) étant logé sur et supporté par des moyens de support (40, 41) correspondants, fixés à la partie inférieure d'une structure de support de charge métallique (43), constituée également par deux parties verticales (44, 45) pliées pour former deux protubérances horizontales (46, 47), pourvues d'un trou traversant vertical (48, 49) respectif, ladite structure de support de charge (43) pouvant être élevée et abaissée; **caractérisée en ce que** ladite unité de filtration et d'infusion (10) est constituée d'une partie inférieure fixe (57), et d'une partie supérieure mobile (14, 15) fonctionnant conjointement l'une avec l'autre, ladite partie inférieure fixe (57) étant conçue pour recevoir le filtre de support de pastille (60), ou le support pour la substance moulue en vrac pour l'infusion (59), ou une coupe de support de pastille (61) appropriée; et **caractérisée en ce que** lesdits moyens de chauffage d'eau comprennent au moins un élément chauffant électrique alimenté par une basse tension continue (63) et des éléments chauffants alimentés par au moins une autre tension alternative (127 ou 230 V) (64), et **en ce que** des moyens formant vanne (67) sont prévus pour dévier l'écoulement de l'eau dans le circuit de circulation, et des moyens thermostatiques (68, 69) sont prévus pour réguler la température de chauffage desdits éléments chauffants (63, 64), la machine étant agencée de manière à ce que, dans chaque cycle d'infusion dans ladite unité de filtration et d'infusion (10), la substance relative pour préparer la boisson infusée soit d'abord chargée, ensuite ladite poignée de régulation (13) soit poussée dans sa position inclinée et déplacée vers le bas, avec la compression résultante vers le bas desdites plaques supérieures (25, 27), contre l'action desdits moyens élastiques (54, 55), jusqu'à ce que ladite partie supérieure mobile (14, 15) vienne en contact avec ladite partie inférieure fixe (57), et que, dans cette position, le cycle d'infusion soit débuté, pendant lequel ladite poignée de régulation (13) est toujours maintenue dans cette position abaissée, jusqu'à la fin de l'infusion et la distribution de la boisson sur les doses établies, et que cette poignée de régulation (13) soit ensuite relâchée et retourne d'elle-même automatiquement, avec un déplacement vers le haut inverse du précédent, à sa position élevée de départ, grâce à la poussée vers le haut exercée par lesdits moyens élastiques (54, 55) sur ladite plaque supérieure (25), de sorte que la pastille utilisée de la boisson qui vient d'être préparée puisse être retirée des parties constitutives de ladite unité de filtration et d'infusion (10), préparant de ce fait la machine pour exécuter un autre cycle d'infusion.

2. Machine selon la revendication 1, **caractérisée en ce que**, dans la partie arrière de ladite plaque supérieure (25) et de ladite plaque inférieure (26), une paroi métallique de séparation plate verticale (56) est agencée, laquelle délimite à la fois la cavité interne pour recevoir les moyens contenant de l'eau (70) et une cavité interne supplémentaire pour recevoir les parties constitutives fonctionnelles de la machine.

3. Machine selon la revendication 1, **caractérisée en ce que** ladite unité de filtration et d'infusion (10) est assemblée dans un espace avant délimité par ladite plaque supérieure (25), ladite plaque inférieure (26) et la paroi avant (7) de l'armoire (6), et est accessible à travers une ouverture supérieure (8) de ladite paroi avant (7).

4. Machine selon la revendication 3, **caractérisée en ce que** ledit corps supportant le filtre (57) est réalisé en une forme cylindrique ou polygonale, réalisé en une matière plastique ou en un autre matériau approprié, et est fixé à la surface supérieure de ladite plaque inférieure (26) et pourvu d'une chambre interne pour la préparation et le passage de la boisson infusée, qui communique à travers un trou inférieur avec le support de tasse (11) sous-jacent, sur lequel un verre, une tasse ou un autre contenant approprié est placé, dans lequel la boisson infusée qui est délivrée est collectée.

5. Machine selon la revendication 4, **caractérisée en ce que** la partie supérieure mobile de ladite unité de filtration et d'infusion (10) est placée dans la partie supérieure et en correspondance avec ladite partie inférieure fixe (57), laquelle est constituée d'une tête cylindrique (14) et d'une vanne (15), fixée à l'intérieur de la tête (14), et prévue pour la distribution de l'eau chaude à travers cette unité, et ces parties constitutives communiquent avec lesdits moyens d'échange de chaleur (27).

6. Machine selon la revendication 5, **caractérisée en ce que** lesdits moyens de pompage sont constitués d'au moins une pompe (65) pourvue de moyens de commande électroniques, qui permettent la fourniture d'une tension d'entrée continue (par exemple, de 12 V), et qui sont également conçus pour arrêter le fonctionnement de la machine si le niveau de tension de la batterie d'alimentation passe au-dessous d'une valeur déterminée, lesdits moyens de commande électroniques pouvant en outre être connectés également à une carte électronique pour commander les différents composants électriques et pour définir les cycles de fonctionnement de la machine et pouvant être connectés aux dits moyens de commande (17, 18, 4), respectivement prévus pour mettre en marche et arrêter et pour commuter l'alimentation électrique vers ledit élément chauffant alimenté par une première tension continue (63) ou ledit élément chauffant alimenté par une tension alternative supplémentaire (64), et pour permettre ou ne pas permettre la distribution de l'eau chaude pour préparer la boisson infusée.

7. Machine selon la revendication 6, **caractérisée en ce que** lesdits moyens formant vanne comprennent au moins une électrovanne à trois états (67) située au-dessus de ladite plaque supérieure (25) et dont l'entrée, interceptée par l'élément de vanne interne de la susdite électrovanne, est reliée au côté de distribution de ladite pompe (65), et dont une première sortie est jointe, par l'intermédiaire d'un conduit souple (75), à l'entrée du conduit interne desdits moyens d'échange de chaleur (27), la sortie de ce conduit interne communiquant avec ladite unité de distribution d'eau (14, 15), et une deuxième sortie (78) de ladite électrovanne (67) est en outre reliée au dit support de tasse (11) par un conduit souple supplémentaire (76), par l'intermédiaire d'un raccord de tuyau en forme de T (77) réalisé en matière plastique, pour décharger l'eau contenue dans lesdits moyens d'échange de chaleur (27) à la fin de la distribution de boisson, et pour éviter de cette manière la formation de calcaire.

8. Machine selon les revendications précédentes, **caractérisée en ce qu'**elle peut être installée dans un espace (81) accessible par l'intermédiaire d'une porte avant (82) d'une colonne allongée verticale (79), dont la structure est réalisée sur la base de méthacrylate ou d'une matière plastique ou de verre, ou d'une feuille peinte ou d'une feuille inoxydable, ou d'un matériau d'un autre type, laquelle colonne est pourvue d'une base inférieure élargie (80) qui peut être disposée sur une surface horizontale, ladite machine pouvant être installée également dans un chariot de transport vertical (86) pourvu d'une poignée supérieure (87) et d'un ensemble d'espaces superposés les uns aux autres, et avec une batterie et n'importe quelles roues de roulement (90) possibles, ladite machine pouvant également être installée dans un chariot de transport supplémentaire (91) analogue au dit chariot (86) et pourvu d'espaces supplémentaires (95, 96) agencés adjacents les uns aux autres et côte-à-côte et avec un support se projetant latéralement (97) pour placer le récipient de boisson (98) sur celui-ci.

9. Machine selon les revendications précédentes, **caractérisée en ce que** l'armoire de machine (6) est réalisée avec une profondeur supérieure à la précédente, de manière à définir un autre espace (83), adjacent à l'espace du contenant d'eau, dans lequel une batterie (84) est logée, qui est accessible par l'intermédiaire d'une porte avant (85), pour fournir une basse tension continue à toutes les parties constitutives électriques de la susdite machine.

10. Machine selon les revendications précédentes, **caractérisée en ce qu'**elle peut être incluse dans et supportée par un sac de protection et de transport (99), pourvu d'une poignée fixe (100), ou pourvu d'une poignée extensible (101), et d'un câble d'alimentation électrique (102) pour les parties constitutives électriques des machines des deux sacs (99).

11. Machine selon les revendications précédentes, **caractérisée en ce qu'**elle est réalisée en un type portable, pourvu de deux parois latérales (103), d'une poignée supérieure (104) et d'un câble d'alimentation électrique (102).

12. Machine selon les revendications précédentes, **caractérisée en ce qu'**elle est du type intégré, dont l'armoire (6) est agencée pour être intégrée dans un mur, un meuble, etc..., et un cadre périphérique (105) est fixé à la paroi avant de la susdite armoire, lequel se projette à l'extérieur et est plus grand que la paroi avant de la machine et constitué de différents matériaux tels que par exemple du verre ou de l'acier, et, à travers le cadre (105), une ouverture traversante centrale (106) est prévue pour l'accès à la machine et une ouverture traversante (107) est prévue pour ladite poignée de régulation (13), et la machine est également pourvue d'un câble d'alimentation électrique, tandis que l'ouverture (106) peut être fermée par un couvercle (109) correspondant.

13. Machine selon les revendications précédentes, **caractérisée en ce qu'**elle peut être installée dans des sacs contenant les batteries et divers accessoires (par exemple le café, le sucre, les modes d'emploi, etc.), lesquels sacs sont directement portés par l'opérateur, ou appliqués par exemple à des motocyclettes, ou à d'autres moyens de transport et, dans un tel cas, ils peuvent être également alimentés par les batteries des susdits moyens de locomotion.

14. Machine selon les revendications précédentes, **caractérisée en ce que** lesdits moyens de pompage (111) peuvent être couplés également à au moins un composant électronique alimenté par une basse tension continue (113) (par exemple, de 12 VCC) et capable de convertir la tension nécessaire pour alimenter la pompe de la tension d'alimentation continue en la tension d'alimentation alternative.
